# EUROPÄISCHE PATENTSCHRIFT

(11) **EP 2 983 557 B1**
(45) Veröffentlichungstag und Bekanntmachung des Hinweises auf die Patenterteilung: **24.08.2016**
(21) Anmeldenummer: 14719186.0
(22) Anmeldetag: 26.03.2014
(51) Int. Cl.: A47B 88/04

(54) **ANTRIEBSVORRICHTUNG FÜR EIN BEWEGBARES MÖBELTEIL**
DRIVE DEVICE FOR A MOVABLE FURNITURE PART
DISPOSITIF D'ENTRAÎNEMENT POUR UNE PIÈCE DE MEUBLE MOBILE

(30) Priorität: 12.04.2013 AT 2942013
(43) Veröffentlichungstag der Anmeldung: 17.02.2016
(73) Patentinhaber: Julius Blum GmbH, 6973 Höchst (AT)
(72) Erfinder: BRUNNMAYR, Harald, 6912 Hörbranz (AT)
(74) Vertreter: Torggler & Hofinger Patentanwälte
(86) Internationale Anmeldenummer: PCT/AT2014/000061
(87) Internationale Veröffentlichungsnummer: WO 2014/183140

(56) Entgegenhaltungen:
- WO-A1-2009/010138
- DE-B3- 10 313 659
- DE-U1-202010 013 193
- US-A1- 2003 141 638

## Beschreibung

Die Erfindung betrifft eine Antriebsvorrichtung für ein bewegbares Möbelteil, mit einer verriegelbaren Ausstoßvorrichtung zum Ausstoßen des bewegbaren Möbelteils aus einer Schließstellung in eine Offenstellung, wobei die Ausstoßvorrichtung durch Überdrücken des bewegbaren Möbelteils in eine in Schließrichtung hinter der Schließstellung liegende Überdrückstellung entriegelbar ist, wobei zwischen Schließstellung und Überdrückstellung ein Überdrückbereich liegt, und einer Dämpfvorrichtung zum Dämpfen der Schließbewegung des bewegbaren Möbelteils. Zudem betrifft die Erfindung ein Möbel mit einer solchen Antriebsvorrichtung.

In der Möbelbeschlägeindustrie sind schon seit vielen Jahren Antriebsvorrichtungen bekannt, mit denen durch Drücken auf ein bewegbares Möbelteil (z. B. eine Schublade) eine Entriegelung dieses bewegbaren Möbelteils vom Möbelkorpus erfolgt und anschließend das bewegbare Möbelteil geöffnet bzw. aktiv ausgestoßen wird. Dazu weisen solche Antriebsvorrichtungen einen sogenannten Touch Latch-Mechanismus auf. Bei diesem Mechanismus verläuft die Bewegung zum Schließen der Schublade aus der Offenstellung und die Bewegung zum Entriegeln bzw. Öffnen der Schublade aus der Schließstellung in dieselbe Richtung, nämlich in die Schließrichtung.

Eine solche Antriebsvorrichtung, die dem Oberbegriff des Anspruchs 1 entspricht, ist z.B aus DE 20 2010 013 193U bekannt.

Bei einem normalen sanften Schließen (händisch oder durch eine Einziehvorrichtung) wird die Schublade bzw. das bewegbare Möbelteil am Ende der Schließbewegung durch eine Verriegelungsvorrichtung in der Schließstellung gehalten. Wenn aber ein zu starkes Zustoßen oder ein Durchdrücken der Schublade bis an den Endanschlag (entspricht der Überdrückstellung) erfolgt, kann die Ausstoßvorrichtung gar nicht verriegeln bzw. wird sofort wieder ausgelöst, wodurch kein sicheres Schließen bei einer derartigen Fehlbedienung des bewegbaren Möbelteils garantiert ist.

Um dieses Problem zu lösen ist aus der prioritätsälteren aber nicht vorveröffentlichten österreichischen Patentanmeldung A 52/2012 (= AT 511 938 A4) ein Blockierelement bekannt, um die Bewegung in die Überdrückstellung bei zu schneller Schließbewegung zu verhindern.

Die Aufgabe der vorliegenden Erfindung liegt darin, eine alternative Möglichkeit zu schaffen, um ein Durchdrücken des bewegbaren Möbelteils bis an den Endanschlag bzw. bis in die Überdrückstellung und somit ein unmittelbares Auslösen der Ausstoßvorrichtung zu verhindern.

Dies wird durch eine Antriebsvorrichtung mit den Merkmalen von Anspruch 1 gelöst. Demnach ist vorgesehen, dass die Dämpfvorrichtung eine wegabhängige Dämpfung aufweist, wobei die Dämpfkraft in einem der Schließstellung - in Öffnungsrichtung gesehen - vorgelagerten Hauptdämpfbereich höher als im Überdrückbereich ist. Somit wird von der Dämpfvorrichtung die Bewegung des bewegbaren Möbelteils unmittelbar vor Erreichen der Schließstellung stark gehemmt bzw. gebremst, wodurch einem Bediener, der das bewegbare Möbelteil mit großer Kraft selbsttätig in die Schließstellung bewegen will, das Erreichen der Schließstellung vorgetäuscht wird. Dadurch drückt der Bediener nicht mehr weiter auf das bewegbare Möbelteil und es wird somit ein ungewünschtes und sofortiges Wiederauslösen der Ausstoßvorrichtung verhindert.

Grundsätzlich ist anzuführen, dass die Dämpfkraft der Dämpfvorrichtung von der Schließgeschwindigkeit des bewegbaren Möbelteils abhängig ist. Zusätzlichen Einfluss auf die Wirkung der Dämpfvorrichtung haben das Gewicht des bewegbaren Möbelteils (mitsamt Beladung) und die Dämpflänge der Dämpfvorrichtung. Die Dämpfvorrichtung nivelliert sich automatisch, das heißt je höher die Schließgeschwindigkeit bzw. die Wucht des bewegbaren Möbelteils ist, desto höher ist die Dämpfkraft der Dämpfvorrichtung. Bei geringer Schließgeschwindigkeit muss nur wenig Dämpfkraft aufgewendet werden. Bevorzugt sind die Dämpfvorrichtungen so ausgebildet, dass bei einem mit 40 kg beladenen bewegbaren Möbelteil, bei einer Schließgeschwindigkeit von 0,4 m/s und bei einer Dämpflänge (Zylindergröße) von 26 mm das bewegbare Möbelteil - ohne auf das Ende der Dämpfvorrichtung durchzuschlagen - auf 0 m/s abgebremst wird. Die in der Dämpfvorrichtung eruierbare bzw. messbare Dämpfkraft wird in dieser Anmeldung in Newton (Abkürzung: N) angegeben.

Gemäß einem bevorzugten Ausführungsbeispiel der Erfindung ist demnach vorgesehen, dass im Hauptdämpfbereich die Dämpfkraft bei einer Schließgeschwindigkeit von 0,4 m/s zumindest 35 N, vorzugsweise zwischen 45 N und 130 N, beträgt. Durch diese relativ hohe Dämpfkraft im Gegensatz zu bisher bekannten Dämpfvorrichtungen für Antriebsvorrichtungen von bewegbaren Möbelteilen kann das Erreichen der Schließstellung beim ungewünschten Durchdrücken imitiert werden.

Um aber das gewünschte Entriegeln bzw. Ausstoßen der Antriebsvorrichtung nicht zu behindern, ist bevorzugt vorgesehen, dass im Überdrückbereich die Dämpfkraft bei einer Schließgeschwindigkeit von 0,4 m/s zwischen 0 N und 5 N beträgt. Als relativer Vergleich ausgedrückt kann vorgesehen sein, dass die Dämpfkraft im Hauptdämpfbereich zumindest das Fünffache, vorzugsweise zumindest das Zwölffache, der Dämpfkraft im Überdrückbereich beträgt.

Für einen sanften und möglichst gleichmäßigen Dämpfvorgang ist bevorzugt vorgesehen, dass in Schließrichtung vor dem Hauptdämpfbereich ein Vordämpfbereich liegt, wobei die Dämpfkraft im Hauptdämpfbereich höher als im Vordämpfbereich ist. Bevorzugt beträgt dabei die Dämpfkraft im Vordämpfbereich bei einer Schließgeschwindigkeit von 0,4 m/s zwischen 5 N und 35 N. Dabei kann als relative Angabe vorgesehen sein, dass die Dämpfkraft im Hauptdämpfbereich um zumindest 50 %, vorzugsweise um zumindest 100 %, höher als im Vordämpfbereich ist.

Weiters ist für einen sanften Übergang zwischen den einzelnen Dämpfbereichen bevorzugt vorgesehen, dass der Vordämpfbereich, der Hauptdämpfbereich und der Überdrückbereich direkt aneinander anschließen.

Grundsätzlich kann der Hauptdämpfbereich an einer beliebigen Stelle vor der Schließstellung liegen. Um das Erreichen der Schließstellung allerdings möglichst exakt zu imitieren, ist bevorzugt vorgesehen, dass der Hauptdämpfbereich knapp (ca. 1 bis 15 mm) vor oder genau in der Schließstellung endet.

Alternativ zur Definition des Hauptdämpfbereichs über die Newton-Angabe kann auch vorgesehen sein, dass die Dämpfvorrichtung die Schließbewegung des bewegbaren Möbelteils im Hauptdämpfbereich vor Erreichen der Schließstellung auf eine Geschwindigkeit von unter 0,3 mm/Sekunde, vorzugsweise auf unter 0,1 mm/Sekunde, reduziert. Diese Geschwindigkeitsangabe ist natürlich stark abhängig von der vorherigen Schließgeschwindigkeit und vom Gewicht des bewegbaren Möbelteils. Idealerweise sollte bei einer Beladung des bewegbaren Möbelteils mit 40 kg und bei einer Schließgeschwindigkeit von 0,4 m/s diese Geschwindigkeitsreduzierung bis zum Ende des Hauptdämpfbereichs erreicht werden.

Es können prinzipiell verschieden lange Dämpfvorrichtungen verwendet werden. Bevorzugt ist aber vorgesehen, dass der Hauptdämpfbereich maximal 30 mm, vorzugsweise zwischen 15 mm und 20 mm, lang ist.

Um einen Bediener bei einer Fehlbedienung ausreichend auf das Erreichen der - imitierten - Schließstellung aufmerksam zu machen, ist bevorzugt vorgesehen, dass die Dämpfvorrichtung im Hauptdämpfbereich die Schließbewegung für zumindest 5 Sekunden auf eine Geschwindigkeit von unter 0,3 mm/Sekunde dämpft.

Grundsätzlich können verschiedene Arten von Dämpfvorrichtungen wie z. B. ein Rotationsdämpfer oder ähnliches eingesetzt werden. Bevorzugt ist allerdings vorgesehen, dass die Dämpfvorrichtung einen mit einem Dämpfmedium gefüllten Dämpfzylinder und einen im Dämpfzylinder bewegbar gelagerten Dämpfkolben aufweist. Für das Erreichen der hohen Dämpfkraft im Hauptdämpfbereich ist bevorzugt vorgesehen, dass der Dämpfzylinder an einer inneren Oberfläche eine Verengung aufweist, die den Hauptdämpfbereich bildet.

Es kann auch vorkommen, dass aufgrund des hohen Gewichts und/oder aufgrund der hohen Schließgeschwindigkeit sogar die maximale Dämpfkraft der Dämpfvorrichtung im Hauptdämpfbereich überschritten wird. Um dabei Schäden in der Dämpfvorrichtung zu verhindern, ist bevorzugt vorgesehen, dass die Dämpfvorrichtung einen Überlastsicherungsmechanismus aufweist. Beispielhaft wird für solche Überlastsicherungsmechanismen in Dämpfvorrichtungen auf die AT 12633 U1 und die WO 03/081077 A1 verwiesen

Bevorzugt ist generell vorgesehen, dass die einzelnen Dämpfbereiche (Vordämpfbereich, Hauptdämpfbereich und Überdruckbereich) in einer einzigen Dämpfeinheit integriert sind. Es soll aber auch nicht ausgeschlossen sein, dass die Dämpfvorrichtung zwei zumindest teilweise parallel wirkende Dämpfeinheiten, vorzugsweise in Form von Kolben-Zylinder-Einheiten, aufweist, wobei in nur einer dieser Dämpfeinheiten der Hauptdämpfbereich ausgebildet ist. Dies könnte vor allem dann sinnvoll sein, wenn eine bestehende Antriebsvorrichtung nachgerüstet werden soll. Dann müsste nämlich nur eine weitere Dämpfeinheit, die den Hauptdämpfbereich aufweist, zur bestehenden Dämpfeinheit hinzugefügt werden.

Neben einer automatischen Ausstoßvorrichtung kann die beschriebene Antriebsvorrichtung auch eine Einziehvorrichtung zum Einziehen des bewegbaren Möbelteils aus einer Offenstellung in die Schließstellung aufweisen. Dabei ist bevorzugt vorgesehen, dass die von der Einziehvorrichtung ausgelöste Einziehbewegung durch die Dämpfvorrichtung dämpfbar ist. Bei einem normalen Einziehvorgang überwindet dabei die Einziehvorrichtung den Hauptdämpfbereich und bringt die gesamte Antriebsvorrichtung in die "echte" Schließstellung.

Schutz wird auch begehrt für ein Möbel nach Anspruch 13. Generell kann dabei die Antriebsvorrichtung am Möbelkorpus angeordnet sein und das bewegbare Möbelteil aktiv ausstoßen. Umgekehrt kann auch die Antriebsvorrichtung mit dem bewegbaren Möbelteil verbunden sein und sich am Möbelkorpus abstoßen. Die Dämpfvorrichtung selbst muss nicht im selben Bereich wie die Ausstoßvorrichtung angeordnet sein. Vielmehr kann die Dämpfvorrichtung separat zwischen dem Möbelkorpus und dem bewegbaren Möbelteil wirken. Bevorzugt ist die Dämpfvorrichtung an der Ausziehführung befestigt und dämpft die Bewegung einer Ladenschiene zur Korpusschiene. Besonders bevorzugt kann die Dämpfvorrichtung Teil einer Einziehvorrichtung sein, die wiederum separat von der Ausstoßvorrichtung ausgebildet sein kann. Grundsätzlich ist wichtig, dass die Dämpfvorrichtung irgendwo im Bereich des bewegbaren Möbelteils derart angeordnet ist, dass der Hauptdämpfbereich die Schließbewegung des bewegbaren Möbelteils kurz vor Erreichen der Schließstellung dämpft.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch bewegbare Möbelteile in verschiedenen Stellungen,
- Fig. 2: eine im Vordämpfbereich befindliche Dämpfvorrichtung,
- Fig. 3: eine im Hauptdämpfbereich befindliche Dämpfvorrichtung,
- Fig. 4: eine im Überdruckbereich befindliche Dämpfvorrichtung,
- Fig. 5 bis 7: 3D-Schnittansichten der Dämpfvorrichtung in verschiedenen Stellungen,
- Fig. 8: eine Dämpfvorrichtung mit zwei parallel angeordneten Dämpfeinheiten,
- Fig. 9: ein schematisches Diagramm der Dämpfkraft und
- Fig. 10: ein Diagramm der Dämpfkraft anhand konkreter Werte.

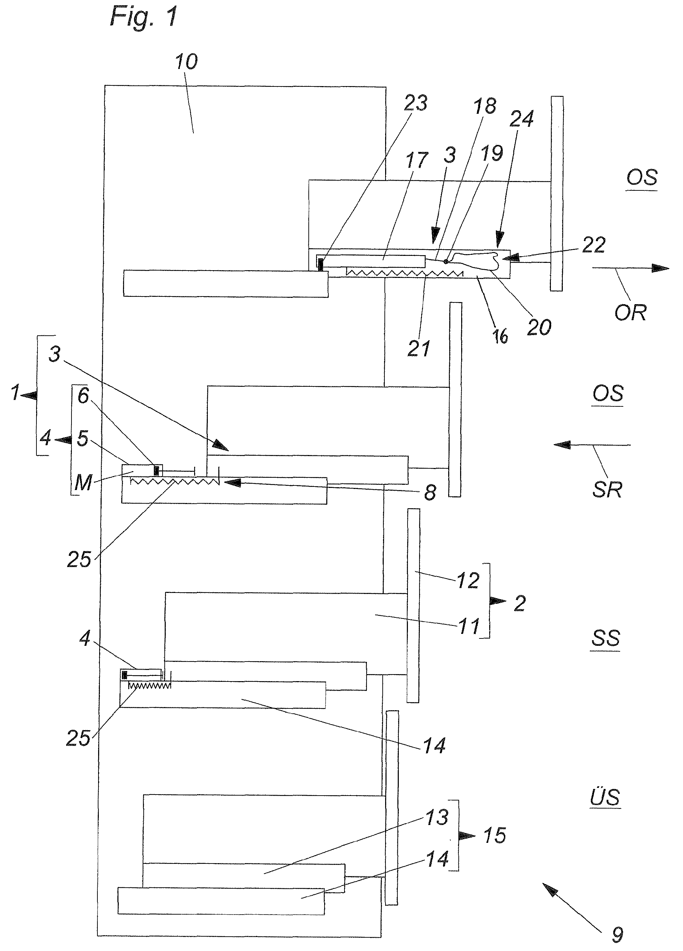

Fig. 1 zeigt generell ein Möbel 9 bestehend aus einem Möbelkorpus 10 und vier bewegbaren Möbelteilen 2, die sich jeweils in unterschiedlichen Stellungen befinden. Von oben nach unten befinden sich die bewegbaren Möbelteile 2 (Schubladen) in einer Offenstellung OS, nach Bewegen in Schließrichtung SR in einer weiteren Offenstellung OS, nach weiterem Bewegen in Schließrichtung SR in der Schließstellung SS und nach dem Überdrücken in einer hinter der Schließstellung SS liegenden Überdruckstellung ÜS. Jedes bewegbare Möbelteil 2 umfasst ein Schubladenbehältnis 11 und eine Frontblende 12. Jedes bewegbare Möbelteil 2 ist über eine Ausziehführung 15 am Möbelkorpus 10 bewegbar gelagert. Die Ausziehführung 15 umfasst eine Ladenschiene 13 und eine Korpusschiene 14, sowie gegebenenfalls eine nicht dargestellte Mittelschiene.

Die wesentlichen Komponenten der Antriebsvorrichtung 1 sind die verriegelbare Ausstoßvorrichtung 3 und die Dämpfvorrichtung 4. Gemäß der Fig. 1 ist die Ausstoßvorrichtung 3 über eine Grundplatte 16 mit der Ladenschiene 13 bzw. mit dem bewegbaren Möbelteil 2 verbunden. Auf dieser Grundplatte 16 ist der Ausstoßschlitten 17 bewegbar gelagert. Der Ausstoßkraftspeicher 21 (gemäß Fig. 1 eine nicht gespannte Druckfeder) ist einerseits an der Grundplatte 16 und andererseits am Ausstoßschlitten 17 befestigt. Am Ausstoßschlitten 17 ist ein Verriegelungshebel 18 verschwenkbar gelagert, wobei an der Spitze des Verriegelungshebels 18 ein Verriegelungszapfen 19 angeordnet ist. Dieser Verriegelungszapfen 19 ist in einer in der Grundplatte 16 ausgebildeten herzkurvenförmigen Führungsbahn 20 geführt. Der gesamte Ausstoßschlitten 17 ist über die Verriegelungsvorrichtung 24 an der Grundplatte 16 verriegelbar, wobei die Verriegelungsvorrichtung 24 vom Verriegelungszapfen 19, von der herzkurvenförmigen Führungsbahn 20 und von dessen Rastmulde 22 gebildet wird. Der Ausstoßschlitten 23 ist über den korpusfesten Mitnehmer 23 zumindest abschnittsweise mit dem Möbelkorpus 10 verbunden bzw. koppelbar.

Die Dämpfvorrichtung 4 zum Dämpfen der Schließbewegung des bewegbaren Möbelteils 2 ist gemäß Fig. 1 an der Korpusschiene 14 angeordnet und weist den Dämpfzylinder 5, das Dämpfmedium M und den Dämpfzylinder 5 bewegbar gelagerten Dämpfkolben 6 auf. Zudem ist im Bereich der Ausziehführung 15 die Einziehvorrichtung 8 vorgesehen, die den als Zugfeder ausgebildeten Einziehkraftspeicher 25 aufweist. Die Dämpfvorrichtung 4 ist dabei derart ausgestaltet, dass vor Erreichen der Schließstellung SS über den Vordämpfbereich -V und den Hauptdämpfbereich H eine wegabhängige Dämpfung gegeben ist.

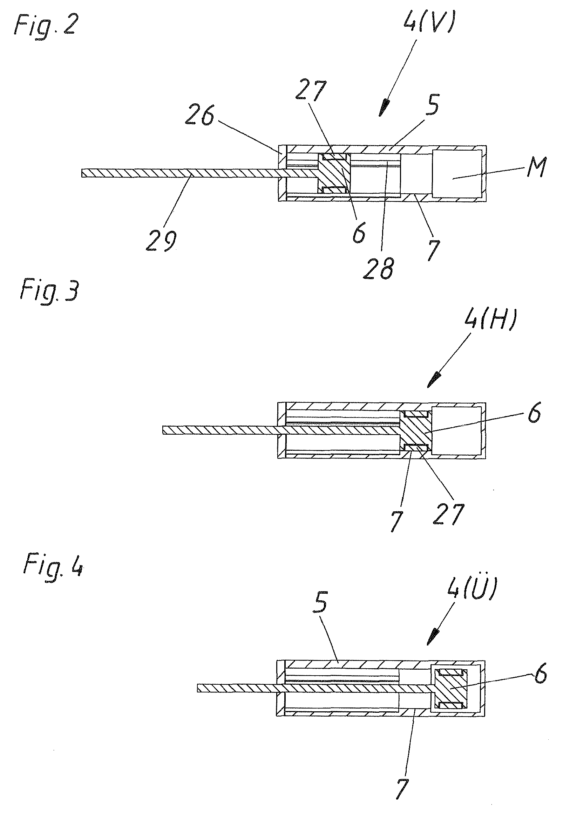

Im Detail sei dazu auf Fig. 2 verwiesen, gemäß der der Dämpfkolben 6 mitsamt Kolbenstange 29 im Dämpfzylinder 5 bewegbar gelagert ist. In dieser Schnittdarstellung ist erkennbar, dass um den Dämpfkolben 6 ein Dichtring 27 angeordnet ist. Zudem ist an der inneren Oberfläche des Dämpfzylinders eine Dämpfungsnut 28 ausgebildet, sodass das Dämpfmedium M von der kolbenstangenabgewandten Seite des Dämpfkolbens 6 auf die kolbenstangenzugewandte Seite des Dämpfkolben 6 bzw. umgekehrt fließen kann. Der Dämpfzylinder 5 ist durch den Zylinderdeckel 26 geschlossen, sodass das Dämpfmedium M nicht austreten kann. In dieser Fig. 2 befindet sich der Dämpfkolben 6 im Vordämpfbereich V.

Demgegenüber befindet sich in Fig. 3 der Dämpfkolben 6 exakt im Bereich der an der Innenseite des Dämpfzylinder 5 ausgebildeten Verengung 7, die den Hauptdämpfbereich H bildet. Wenn sich der Dämpfkolben 6 an dieser Stelle befindet ist die Dämpfwirkung bzw. Dämpfkraft D am größten.

Nachdem dieser Hauptdämpfbereich H überwunden ist, wird die Stellung gemäß Fig. 4 erreicht, indem sich die Antriebsvorrichtung 1 bzw. das bewegbare Möbelteil 2 im Überdruckbereich Ü zwischen der Schließstellung SS und der Überdruckstellung ÜS befindet. In diesem Überdruckbereich Ü ist kaum eine Dämpfkraft D der Dämpfvorrichtung 4 vorhanden.

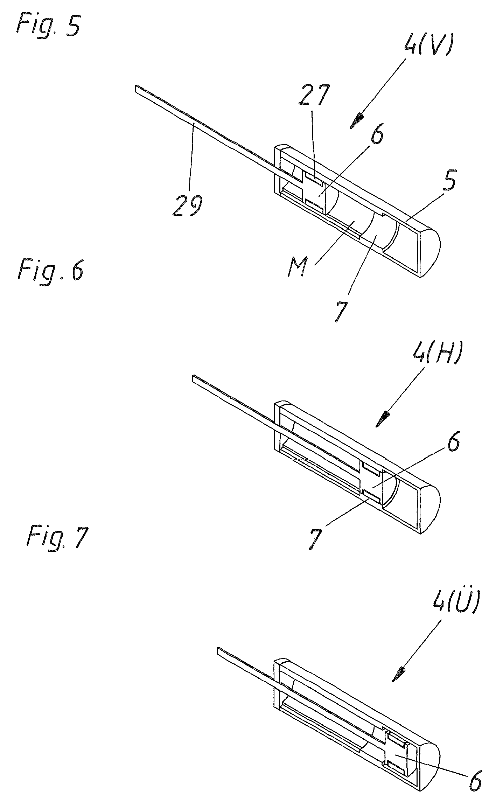

In den Fig. 5 bis 7 sind 3D-Schnittdarstellungen der Dämpfvorrichtung 4 dargestellt, die den Stellungen gemäß den Fig. 2 bis 4 entsprechen.

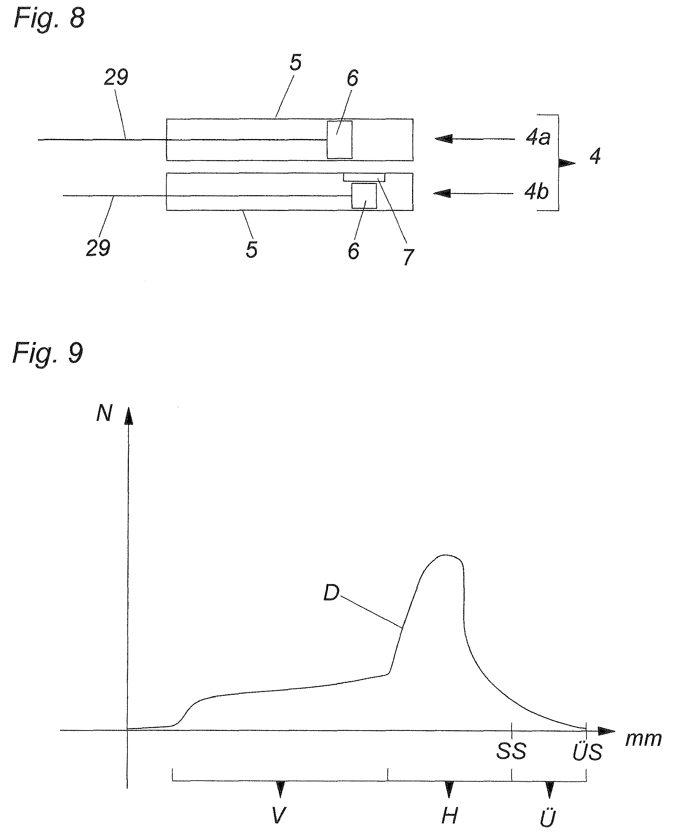

Gemäß den Fig. 2 bis 7 ist eine einzige Kolben-Zylinder-Einheit (Dämpfeinheit) gezeigt, die den Vordämpfbereich V, den Hauptdämpfbereich H und den Überdruckbereich Ü umfasst. Alternativ oder zusätzlich kann die Dämpfvorrichtung 4 aber auch aus zwei Dämpfeinheiten 4a und 4b bestehen, wobei wie in Fig. 8 dargestellt nur die Dämpfeinheit 4b die Verengung 7 aufweist, sodass dieser Teil der Dämpfeinheit 4b den Hauptdämpfbereich H bildet. Eine derartige Ausführung ist vor allem dann sinnvoll, wenn die Dämpfeinheit 4b bei einer bereits bestehenden Antriebsvorrichtung 1 nachgerüstet werden soll. Wichtig ist, dass die Summe der Dämpkräfte D der einzelnen Dämpfeinheiten 4a und 4b wieder die gewünschte Dämpfkraft D für das bewegbare Möbelteil 2 bewirkt.

Fig. 9 zeigt schematisch ein Diagramm mit der Entwicklung der (in N angegebenen) Dämpfkraft D entlang des (in mm angegebenen) Schließweges des bewegbaren Möbelteils 2. Sobald das bewegbare Möbelteil 2 bzw. die Antriebsvorrichtung 1 während der Bewegung entlang des Schließweges auf die Dämpfvorrichtung 4 trifft, steigt die Dämpfkraft D an, wobei sich die Dämpfvorrichtung 4 in einem Vordämpfbereich V befindet. Vor Erreichen der Schließstellung SS steigt die Dämpfkraft D der Dämpfvorrichtung 4 stark an und erreicht den Hauptdämpfbereich H, in welchem bei einer Fehlbedienung das Erreichen der Schließstellung vorgetäuscht wird. Spätestens mit Erreichen der "echten" Schließstellung SS sinkt die Dämpfkraft D wieder auf einen niedrigen Bereich. Im Überdruckbereich Ü zwischen der Schließstellung SS und der Überdruckstellung ÜS liegt die Dämpfkraft D wieder in einem beim gewünschten Auslösen durch geringen Auslösedruck überwindbaren Bereich.

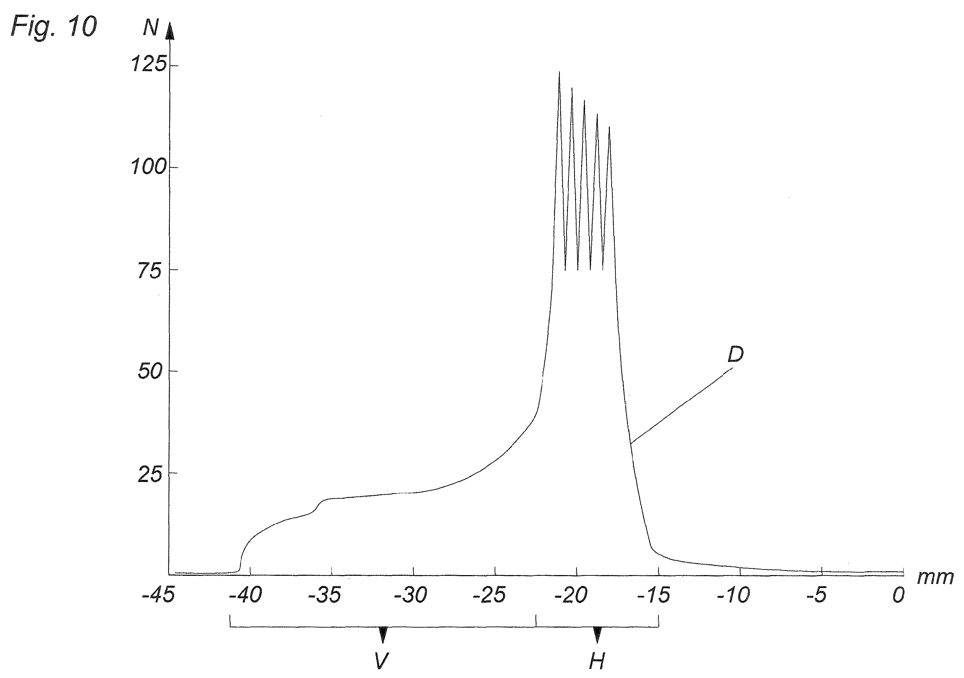

In Fig. 10 ist ein Diagramm mit konkreten Messwerten dargestellt. Die dargestellte Dämpfkraft D wurde bei einer Schließgeschwindigkeit von 100 mm/s bei einer Beladung des bewegbaren Möbelteils 2 mit 40 kg und bei einer Länge des Dämpfzylinders 5 von 35 mm gemessen. Wie ersichtlich ist, steigt mit Beginn des Vordämpfbereichs V die Dämpfkraft D relativ stetig bis zu einem Wert von ca. 35 N an. In diesem Bereich ist die Dämpfkraft D in sich geschwindigkeitsabhängig. Es erfolgt aufgrund der Ausbildung der Dämpfvorrichtung 4 eine automatische Nivellierung der Schließgeschwindigkeit des bewegbaren Möbelteils 2. Sobald der Hauptdämpfbereich H erreicht ist, steigt die Dämpfkraft D stark an und erreicht bei ca. 125 N den Maximalwert, bei dem sich der Überlastsicherungsmechanismus aktiviert, wonach die Dämpfkraft D abrupt auf ca. 70 N nachlässt. Dieser Vorgang mit den Überlastspitzen wiederholt sich mehrmals bis der Hauptdämpfbereich H überwunden ist und die Dämpfkraft D praktisch auf 0 N abfällt.

Somit ist durch die vorliegende Erfindung eine Antriebsvorrichtung 1 beschrieben, bei der eine wegabhängige Dämpfung dafür sorgt, dass in einem Bereich vor Erreichen der Schließstellung SS die Dämpfkraft D der Dämpfvorrichtung 4 so stark erhöht ist, dass einem Bediener bei einer Fehlbedienung das Erreichen der Schließstellung vorgetäuscht wird, womit eine alternative Art eines Durchdrückschutzes geschaffen ist.

## Patentansprüche

1. Antriebsvorrichtung (1) für ein bewegbares Möbelteil (2), mit
- einer verriegelbaren Ausstoßvorrichtung (3) zum Ausstoßen des bewegbaren Möbelteils (2) aus einer Schließstellung (SS) in eine Offenstellung (OS), wobei die Ausstoßvorrichtung (3) durch Überdrücken des bewegbaren Möbelteils (2) in eine in Schließrichtung (SR) hinter der Schließstellung (SS) liegende Überdrückstellung (ÜS) entriegelbar ist, wobei zwischen Schließstellung (SS) und Überdrückstellung (ÜS) ein Überdrückbereich (Ü) liegt, und
- einer Dämpfvorrichtung (4) zum Dämpfen der Schließbewegung des bewegbaren Möbelteils (2),
**dadurch gekennzeichnet, dass** die Dämpfvorrichtung (4) eine wegabhängige Dämpfung aufweist, wobei die Dämpfkraft (D) in einem der Schließstellung (SS) - in Öffnungsrichtung (OR) gesehen - vorgelagerten Hauptdämpfbereich (H) höher als im Überdrückbereich (Ü) ist.

2. Antriebsvorrichtung nach Anspruch 1, **dadurch gekennzeichnet, dass** die Dämpfkraft (D) abhängig von der Schließgeschwindigkeit der Schließbewegung des bewegbaren Möbelteils (2) ist.

3. Antriebsvorrichtung nach Anspruch 1 oder 2, **dadurch gekennzeichnet, dass** die Dämpfkraft (D) im Hauptdämpfbereich (H) zumindest das Fünffache, vorzugsweise zumindest das Zwölffache, der Dämpfkraft (D) im Überdrückbereich (Ü) beträgt.

4. Antriebsvorrichtung nach einem der Ansprüche 1 bis 3, **dadurch gekennzeichnet, dass** im Hauptdämpfbereich (H) die Dämpfkraft (D) bei einer Schließgeschwindigkeit von 0,4 m/s zumindest 35 N, vorzugsweise zwischen 45 N und 130 N, beträgt.

5. Antriebsvorrichtung nach einem der Ansprüche 1 bis 4, **dadurch gekennzeichnet, dass** im Überdrückbereich (Ü) die Dämpfkraft (D) bei einer Schließgeschwindigkeit von 0,4 m/s zwischen 0 N und 5 N beträgt.

6. Antriebsvorrichtung nach einem der Ansprüche 1 bis 5, **dadurch gekennzeichnet, dass** der Hauptdämpfbereich (H) vor oder genau in der Schließstellung (SS) endet.

7. Antriebsvorrichtung nach einem der Ansprüche 1 bis 6, **dadurch gekennzeichnet, dass** der Hauptdämpfbereich (H) maximal 30 mm, vorzugsweise zwischen 15 mm und 20 mm, lang ist.

8. Antriebsvorrichtung nach einem der Ansprüche 1 bis 7, **dadurch gekennzeichnet, dass** die Dämpfvorrichtung (4) einen mit einem Dämpfmedium (M) gefüllten Dämpfzylinder (5) und einen im Dämpfzylinder (5) bewegbar gelagerten Dämpfkolben (6) aufweist.

9. Antriebsvorrichtung nach Anspruch 8, **dadurch gekennzeichnet, dass** der Dämpfzylinder (5) an einer inneren Oberfläche eine Verengung (7) aufweist, die den Hauptdämpfbereich (H) bildet.

10. Antriebsvorrichtung nach einem der Ansprüche 1 bis 9, **dadurch gekennzeichnet, dass** die Dämpfvorrichtung (4) einen Überlastsicherungsmechanismus aufweist.

11. Antriebsvorrichtung nach einem der Ansprüche 1 bis 10, **dadurch gekennzeichnet, dass** die Dämpfvorrichtung (4) zwei zumindest teilweise parallel wirkende Dämpfeinheiten (4a, 4b), vorzugsweise in Form von Kolben-Zylinder-Einheiten, aufweist, wobei in nur einer dieser Dämpfeinheiten (4b) der Hauptdämpfbereich (H) ausgebildet ist.

12. Antriebsvorrichtung nach einem der Ansprüche 1 bis 11, **gekennzeichnet durch** eine Einziehvorrichtung (8) zum Einziehen des bewegbaren Möbelteils (2) aus einer Offenstellung (OS) in die Schließstellung (SS).

13. Möbel (9) mit einer Antriebsvorrichtung (1) nach einem der Ansprüche 1 bis 12.

14. Möbel nach Anspruch 13, **dadurch gekennzeichnet, dass** die Dämpfvorrichtung (4) die Schließbewegung des bewegbaren Möbelteils (2) im Hauptdämpfbereich (H) vor Erreichen der Schließstellung (SS) auf eine Geschwindigkeit von unter 0,3 mm/Sekunde, vorzugsweise auf unter 0,1 mm/Sekunde, reduziert.

15. Möbel nach Anspruch 13 oder 14, **dadurch gekennzeichnet, dass** die Dämpfvorrichtung (4) im Hauptdämpfbereich (H) die Schließbewegung für zumindest 5 Sekunden auf eine Geschwindigkeit von unter 0,3 mm/Sekunde dämpft.

## Claims

1. A drive device (1) for a moveable furniture part (2) comprising
- a lockable ejection device (3) for ejection of the moveable furniture part (2) from a closed position (SS) into an open position (OS), wherein the ejection device (3) can be unlocked by over-pressing of the moveable furniture part (2) into an over-pressing position (ÜS) which is behind the closed position (SS) in the closing direction (SR), wherein an over-pressing region (Ü) is between the closed position (SS) and the over-pressing position (ÜS), and
- a damping device (4) for damping the closing movement of the moveable furniture part (2),
**characterised in that** the damping device (4) has a displacement-dependent damping action, wherein the damping force (D) in a main damping region (H) which is disposed in front of the closed position (SS) - as viewed in the opening direction (OR) - is higher than in the over-pressing region (Ü).

2. A drive device as set forth in claim 1 **characterised in that** the damping force (D) is dependent on the closing speed of the closing movement of the moveable furniture part (2).

3. A drive device as set forth in claim 1 or claim 2 **characterised in that** the damping force (D) in the main damping region (H) is at least five times, preferably at least twelve times, the damping force (D) in the over-pressing region (Ü).

4. A drive device as set forth in one of claims 1 through 3 **characterised in that** in the main damping region (H) the damping force (D) at a closing speed of 0.4 m/s is at least 35 N, preferably between 45 N and 130 N.

5. A drive device as set forth in one of claims 1 through 4 **characterised in that** in the over-pressing region (Ü) the damping force (D) at a closing speed of 0.4 m/s is between 0 N and 5 N.

6. A drive device as set forth in one of claims 1 through 5 **characterised in that** the main damping region (H) ends before or precisely in the closed position (SS).

7. A drive device as set forth in one of claims 1 through 6 **characterised in that** the main damping region (H) is at a maximum 30 mm, preferably between 15 mm and 20 mm, in length.

8. A drive device as set forth in one of claims 1 through 7 **characterised in that** the damping device (4) has a damping cylinder (5) filled with a damping medium (M) and a damping piston (6) supported moveably in the damping cylinder (5).

9. A drive device as set forth in claim 8 **characterised in that** the damping cylinder (5) at an inner surface has a constriction (7) which forms the main damping region (H).

10. A drive device as set forth in one of claims 1 through 9 **characterised in that** the damping device (4) has an overload protection mechanism.

11. A drive device as set forth in one of claims 1 through 10 **characterised in that** the damping device (4) has two damping units (4a, 4b) operating at least partially in parallel, preferably in the form of piston-cylinder units, wherein the main damping region (H) is provided in only one of those damping units (4b).

12. A drive device as set forth in one of claims 1 through 11 **characterised by** a retraction device (8) for retraction of the moveable furniture part (2) from an open position (OS) into the closed position (SS).

13. An article of furniture (9) having a drive device (1) as set forth in one of claims 1 through 12.

14. An article of furniture as set forth in claim 13 **characterised in that** the damping device (4) reduces the closing movement of the moveable furniture part (2) in the main damping region (H) before reaching the closed position (SS) to a speed of below 0.3 mm/second, preferably to below 0.1 mm/sec.

15. An article of furniture as set forth in claim 13 or claim 14 **characterised in that** in the main damping region (H) the damping device (4) damps the closing movement to a speed of below 0.3 mm/second for at least five seconds.

## Revendications

1. Dispositif d'entraînement (1) pour une partie de meuble mobile (2), avec
- un dispositif éjecteur pouvant être verrouillé (3) destiné à éjecter la partie de meuble mobile (2) d'une position de fermeture (SS) dans une position d'ouverture (OS), dans lequel le dispositif éjecteur (3) peut être déverrouillé par surpression de la partie de meuble mobile (2) dans une position de surpression (ÜS) située, dans le sens de fermeture (SR), derrière la position de fermeture (SS), dans lequel entre la position de fermeture (SS) et la position de surpression (ÜS) existe une zone de surpression (Ü), et
- un dispositif amortisseur (4) pour amortir le mouvement de fermeture de la partie de meuble mobile (2),
**caractérisé en ce que** le dispositif amortisseur (4) présente un amortissement dépendant du trajet, dans lequel la force d'amortissement (D) est plus élevée dans une zone d'amortissement principale (H) située en amont de la position de fermeture (SS) - vue dans le sens d'ouverture (OR) - que dans la zone de surpression (Ü).

2. Dispositif d'entraînement selon la revendication 1, **caractérisé en ce que** la force d'amortissement (D) est dépendante de la vitesse de fermeture du mouvement de fermeture de la partie de meuble mobile (2).

3. Dispositif d'entraînement selon la revendication 1 ou 2, **caractérisé en ce que** la force d'amortissement (D) s'élève dans la zone d'amortissement principale (H) à au moins le cinquième, de préférence au moins le douzième, de la force d'amortissement (D) dans la zone de surpression (Ü).

4. Dispositif d'entraînement selon l'une des revendications 1 à 3, **caractérisé en ce que** dans la zone d'amortissement principale (H), la force d'amortissement (D) s'élève avec une vitesse de fermeture de 0,4 m/s à au moins 35 N, de préférence entre 45 N et 130 N.

5. Dispositif d'entraînement selon l'une des revendications 1 à 4, **caractérisé en ce que** dans la zone de surpression (Ü), la force d'amortissement (D) s'élève avec une vitesse de fermeture de 0,4 m/s, entre 0 N et 5 N.

6. Dispositif d'entraînement selon l'une des revendications 1 à 5, **caractérisé en ce que** la zone d'amortissement principale (H) se termine en amont ou exactement dans la position de fermeture (SS).

7. Dispositif d'entraînement selon l'une des revendications 1 à 6, **caractérisé en ce que** la zone d'amortissement principale (H) fait au maximum 30 mm, de préférence entre 15 mm et 20 mm, de long.

8. Dispositif d'entraînement selon l'une des revendications 1 à 7, **caractérisé en ce que** le dispositif amortisseur (4) présente un cylindre d'amortissement (5) rempli d'un milieu d'amortissement (M) et un piston d'amortissement (6) logé de façon mobile dans un cylindre d'amortissement (5).

9. Dispositif d'entraînement selon la revendication 8, **caractérisé en ce que** le cylindre d'amortissement (5) présente un rétrécissement (7) sur une surface interne, lequel forme la zone d'amortissement principale (H).

10. Dispositif d'entraînement selon l'une des revendications 1 à 9, **caractérisé en ce que** le dispositif amortisseur (4) présente un mécanisme de sécurité de surcharge.

11. Dispositif d'entraînement selon l'une des revendications 1 à 10, **caractérisé en ce que** le dispositif amortisseur (4) présente deux unités d'amortissement (4a, 4b) agissant au moins en partie parallèlement, de préférence sous forme d'unités à piston et cylindre, dans lequel la zone principale d'amortissement (H) est conçue dans uniquement une de ces unités d'amortissement (4b).

12. Dispositif d'entraînement selon l'une des revendications 1 à 11, **caractérisé par** un dispositif d'introduction (8) pour introduire la partie de meuble mobile (2) depuis une position d'ouverture (OS) dans la position de fermeture (SS).

13. Meuble (9) avec un dispositif d'entraînement (1) selon l'une des revendications 1 à 12.

14. Meuble selon la revendication 13, **caractérisé en ce que** le dispositif amortisseur (4) réduit le mouvement de fermeture de la partie de meuble mobile (2) dans la zone d'amortissement principale (H) avant d'atteindre la position de fermeture (SS) à une vitesse de moins de 0,3 mm/seconde, de préférence à moins de 0,1 mm/seconde.

15. Meuble selon la revendication 13 ou 14, **caractérisé en ce que** le dispositif amortisseur (4) dans la zone d'amortissement principale (H) amortit le mouvement de fermeture pendant au moins 5 secondes à une vitesse de moins de 0,3 mm/seconde.
